# EUROPEAN PATENT APPLICATION

(11) **EP 3 696 728 A1**
(43) Date of publication of application: **19.08.2020**
(21) Application number: 18866988.1
(22) Date of filing: 10.10.2018
(51) Int. Cl.: G06K 9/62, G06K 9/46, G06T 7/13

(54) **BONE MARROW CELL MARKING METHOD AND SYSTEM**

(30) Priority: 10.10.2017 CN 201710935207
(71) Applicant: Hangzhou Zhiwei Information Technology Co., Ltd., Zhejiang 311121 (CN)
(72) Inventor: LI, Qiang, Zhejiang 311121 (CN); LU, Ju, Zhejiang 311121 (CN); LI, Shun, Zhejiang 311121 (CN)
(74) Representative: Zaboliene, Reda
(86) International application number: PCT/CN2018/109544
(87) International publication number: WO 2019/072181

(57) **Abstract**

A method and system for labeling bone marrow cells. The method includes: acquiring a specimen image, extracting a cell contour from the specimen image by using an image processing algorithm, and marking the extracted cell contour by a marking frame to obtain a contour cell image; inputting the contour cell image into a classification model to obtain a classified cell image and its corresponding classified cell information; obtaining preset color information and preset name information for preset cell classes, classifying the preset color information according to the preset cell classes to obtain classification color information; and extracting name information and classified color information corresponding to the classified cell image according to the classified cell information of the classified cell image and the classification color information, collectively labeling the classified cell image according to the extracted name information and classified color information, and displaying the collectively labeled classified cell image.

## Description

### CROSS-REFERENCE TO RELATED APPLICATIONS

This application is based on and claims the priority of Chinese Patent Application No. 201710935207.1, filed on October 10, 2017, which is incorporated herein by reference in its entirety.

### TECHNICAL FIELD

The present disclosure generally relates to the field of biomedical engineering technology and, more particularly, to bone marrow cell labeling methods and systems.

### BACKGROUND

Cell labeling refers to the labeling of cells as a subject in order to track the action and behavior of a particular cell in a multicellular system. Human bone marrow cells are the origin of all blood cells and immune cells. There are many kinds of bone marrow cells in different forms. Various diseases can cause changes in the morphology of bone marrow cells. Usually, medical experts have to manually count and classify bone marrow cells under the microscope. Manual methods are time consuming and require specialized medical knowledge. As cell images obtained directly from 2D or 3D microscopes become more common, individual cell images are extracted from the background and then analyzed.

At present, cell contours are commonly used to label the cells, and each individual cell is shown according cell type, and each type of cell is only shown by a cell name. The main drawback is that typical bone marrow cells are transformed into atypical bone marrow cells. These cells have their specific names both medically and clinically, and the cell names of the same large class may be partially duplicated. Therefore, labeling cells using only cell names is not easy to be read. In addition, different experts, hospitals, regions, and countries define different cell names for certain cells of the same type. Therefore, labeling cells using only cell names may easily lead to conflicts in understanding.

### SUMMARY

The object of embodiments of the present disclosure is to provide a method and a system for labeling bone marrow cells. Classified cell images obtained by the method are collectively labeled according to their corresponding name information and classified color information. That is, the cells are labeled with their corresponding name information and classified color information. In this manner, each type of cells has a specific and non-repeating color label, which is not only easy to read, but also avoids naming conflicts and is convenient for inspection.

According to one aspect of the present disclosure, a method for labeling bone marrow cells is provided. The method includes:
acquiring a specimen image, extracting a cell contour from the specimen image by using an image processing algorithm, and marking the extracted cell contour by a marking frame, to obtain a contour cell image;
inputting the contour cell image into a classification model to obtain a classified cell image and its corresponding classified cell information;
obtaining preset color information and preset name information for preset cell classes, and classifying the preset color information according to the preset cell classes to obtain classification color information; and
extracting name information and classified color information corresponding to the classified cell images according to the classified cell information and the classification color information, collectively labeling the classified cell image according to the extracted name information and classified color information, and displaying the collectively labeled classified cell image.

According to another aspect of the present disclosure, a bone marrow cell labeling system is provided. The system includes a processor, and a memory storing instructions executable by the processor, wherein the processor is configured to:
acquire a specimen image, extract a cell contour from the specimen image by using an image processing algorithm, and mark the extracted cell contour by a marking frame, to obtain a contour cell image;
input the contour cell image into a classification model to obtain a classified cell image and its corresponding classified cell information;
obtain preset color information and preset name information for preset cell classes, and classify the preset color information according to the preset cell classes to obtain classification color information; and
extract name information and classified color information corresponding to the classified cell image according to the classified cell information and the classification color information, collectively label the classified cell image according to the extracted name information and classified color information, and display the collectively labeled classified cell image.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is a flow chart of a method for labeling bone marrow cells according to an exemplary embodiment of the present disclosure.
FIG. 2 is a schematic block diagram of a bone marrow cell labeling system according to an exemplary embodiment of the present invention.
FIG. 3 is a schematic block diagram of a classification processing module, according to an exemplary embodiment of the present invention.
FIG. 4 is a schematic block diagram of a device for labeling bone marrow cells, according to an exemplary embodiment of the present disclosure.
FIG. 5 is an exemplary specimen image with marking frames generated according to an embodiment of the present disclosure.
FIG. 6 is an example of a collectively labeled classified cell image generated according to an embodiment of the present disclosure.
FIG. 7 shows an example of a collectively labeled specimen image generated according to an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

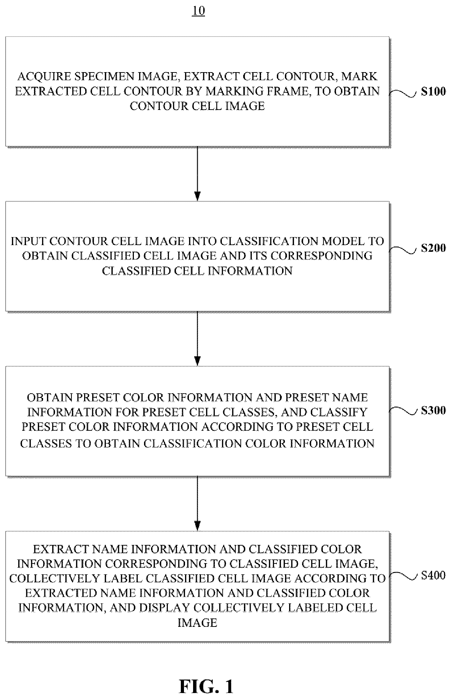

FIG. 1 is a flowchart of a method 10 for labeling bone marrow cells according to an exemplary embodiment of the present disclosure. Referring to FIG. 1, the method 10 includes the following steps:
S100: acquiring a specimen image, extracting a cell contour from the specimen image by using an image processing algorithm, and marking the extracted cell contour by a marking frame to obtain a contour cell image of the extracted cell contour;
S200: inputting the contour cell image into a classification model to obtain a classified cell image and its corresponding classified cell information;
S300: obtaining preset color information and preset name information for preset cell classes, classifying the preset color information according to the preset cell classes, and obtaining classification color information;
S400: extracting name information and classified color information corresponding to the classified cell image according to the classified cell information of the classified cell image and the classification color information, collectively labeling the classified cell image according to the extracted name information and classified color information, and displaying the collectively labeled cell image.

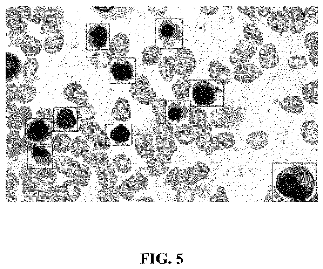

The shape of the marking frame may be the same as the shape of the extracted cell contour. Alternatively, the extracted cell contour may be marked by a marking frame of another shape. For example, the marking frame may have a regular shape such as a rectangle, a circle, a triangle, and the like, or the marking frame may have an irregular shape. In the present embodiment, the extracted cell contour is marked by using a rectangular marking frame. The shape of the rectangular marking frame is closest to the overall contour of bone marrow cells, thus reducing processing burden. FIG. 5 shows an example of a specimen image with marking frames generated according to an embodiment of the present disclosure. As shown in FIG. 5, the marking frames mark cell contours extracted from the specimen image.

The classification model may be preset before the contour cell image is input into the classification model. The classification model may be established through a classification process or by a classifier. The classification model established by the classifier may be established by one or more of a neural network, a support vector base, a Bayesian network, and a decision tree. The present embodiment does not limit on the type of network.

The preset cell classes are the classes of bone marrow cells, including major classes, subclasses included within the major classes, and subclasses included within the subclasses included within the major classes, etc. The preset color information includes preset colors used to identify the preset cell classes. The classification color information includes a corresponding relationship between the preset cell classes and the preset colors. The major classes, the subclasses in the major classes, and the subclasses in the subclasses, etc. are all distinguished from each other by different colors. In some embodiments, different color systems may be used to represent different cell classes to which the cell belongs. For example, the red color system may be used to represent a major class, and the blue color system may be used to represent a subclass in the major class. In this manner, it may be easy to distinguish between different cell classes. In other embodiments, the color system employed is not limited. For example, the granulocyte system, which is a major class, may have corresponding color information defined by RGB value of #159845. Also for example, the red blood cell system, which is also a major class, may have corresponding color information defined by RGB value of #e30b20. As another example, the original granulocyte, which is a subclass of the granulocyte system, may have corresponding color information defined by RGB values of #159845 and #07f363; and the original red blood cell, which is a subclass of the red blood cell system, may have corresponding color information defined by RGB values of #e30b20 and #159848. A classified cell image may be labeled with color blocks representing its classified color information. For example, a classified cell image in a major class may be labeled with one color block; a classified cell image in a subclass included within a major class may be labeled with two color blocks; and a classified cell image in a subclass included within a subclass included within a major class may be labeled with three color blocks. By labeling the classified cell image with the color blocks, the color blocks may be displayed as, e.g., in an order from left to right, the color block of the major class, the color blocks of the subclasses of the major class, and the color blocks of the subclasses of the subclasses.

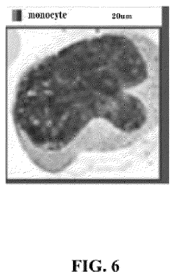

The preset name information includes names of the preset cell classes. Each class of bone marrow cells has its corresponding and unique name information. The classified cell information indicates a classification state of a cell, i.e., which class a cell belongs to. The class state of a cell may be determined by analyzing the cell from the major classes to the subclasses. For example, it is first determined which major class the cell belongs to, then it is determined which subclass included within the major class the cell belongs to, and finally it is determined which subclass included within the subclass included within the major class the cell belongs to. The final classification result of the cell may be that the cell belongs to a subclass of a major class, or that the cell belongs to a subclass of a subclass of a major class. Finally, the name information corresponding to the cell may be determined according to the classified cell information of the cell, and then the classified color information corresponding to the cell may be determined according to classified cell information of the cell and the classification color information, to realize collective labeling. For example, in addition to displaying the rectangular marking frame, the cell name information and classified color information may be simultaneously displayed. FIG. 6 shows an example of a collectively labeled classified cell image generated according to an embodiment of the present disclosure. As shown in FIG. 6, the classified cell image is collectively labeled with its corresponding classified color information and name information. The classified color information is shown as two color blocks respectively representing a major class and a subclass to with the cell in the classified cell image belongs.

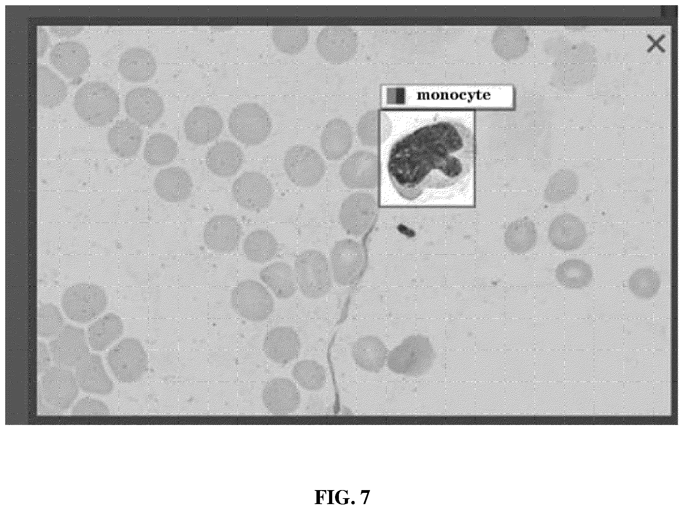

In some embodiments, a specimen image may be collectively labeled with cell name information and classified color information of one or more extracted cell contours. That is, the specimen image may be displayed with one or more marking frames marking one or more cell contours extracted from the specimen image, and each one of the one or more cell contours may be labeled with its corresponding name information and classified color information. FIG. 7 shows an example of a collectively labeled specimen image generated according to an embodiment of the disclosure. As shown in FIG. 7, an extracted cell contour in the specimen image is collectively labeled with a marking frame, its classified color information, and its name information.

The bone marrow cell labeling method 10 provided by the embodiments of the present disclosure may obtain a contour cell image by processing a specimen image by an image processing algorithm, input the contour cell image into a classification model to obtain a classified cell image and its corresponding classified cell information. The bone marrow cell labeling method 10 may also classify preset color information according to preset cell classes to obtain classification color information. The bone marrow cell labeling method 10 may further extract name information and classified color information corresponding to the classified cell image according to the classified cell information and the classification color information, collectively label the classified cell image according to the name information and the classified color information, and display the collectively labeled classified cell image. The processed cell image obtained by the method 10 may be collectively labeled according to the corresponding name information and the classified color information. That is, when labeling the cell name information of the cell in the cell image, the classified color information of the cell may also be labeled. In this manner, different classes of cells may be labeled with specific and non-repeating color markings, which are not only easy to read and search, but also avoiding naming conflicts.

In exemplary embodiments, extracting the cell contour from the specimen image by using the image processing algorithm may include the following steps:

In a first step, performing a grayscale processing and a denoise processing on the specimen image to obtain a denoised grayscale image;

In a second step, calculating an optimal threshold value of the denoised grayscale image by using a maximum variance method, dividing the denoised grayscale image according to the optimal threshold value to obtain a divided image, and converting the divided image into a binarized image, to complete the cell contour extraction.

In one exemplary embodiment, the obtained specimen image may be converted into a grayscale image, and then 3^{∗}3 median filtering may be performed on the grayscale image to remove noise. The optimal threshold may be calculated by using an inter-class maximum variance method (OTUS). The grayscale image may be divided and converted into a binarized image. The integrity of the conversion result may be evaluated. If the cell contour extraction is not completed, the above steps may be repeated until the cell contour extraction is completed. In this manner, the integrity of cell contour extraction may be ensured, and the accuracy of the final collectively labeling is improved.

In exemplary embodiments, step S200 may include the following steps:
In a first step: inputting the contour cell image into the classification model, and assigning a probability of a preset cell class to the contour cell image;
In a second step: classifying the contour cell image according to its corresponding probability and a preset threshold value to obtain a classified cell image;
In a third step: analyzing the classified cell image to obtain its corresponding classified cell information.

The preset cell classes are the classes of bone marrow cells, including major classes, subclasses included within the major classes, subclasses included within the subclasses included within the major classes, etc. The contour cell image may be assigned with a probability by comparing the contour cell image with a standard contour of each preset cell class, calculating a probability corresponding to each preset cell class, and then assigning the calculated maximum probability to the contour cell image. The probability assigned to the contour cell image may be compared with the preset threshold value to extract the closest cell class to obtain the classified cell image. Finally, the classified cell image may be analyzed to obtain the corresponding classified cell information. The analyzing of the classified cell image may be performed by a computer image recognition algorithm. Through the probability calculation comparison, the running speed is improved, and the accuracy of image recognition of each contour cell in the specimen image is guaranteed.

In exemplary embodiments, the bone marrow cell labeling method 10 may also include the following step: after obtaining the classification color information, storing the preset name information and the classification color information to create a labeling database.

After the labeling database is created, the name information and the classified color information may be extracted from the labeling database and usage information may be automatically generated. The usage information may include, but is not limited to, time parameters, number of usage, label location information, and the like. For example, the name information and the classified color information corresponding to a classified cell image may be extracted from the labeling database according to the classified cell information of the classified cell image, the classified cell image may be collectively labeled with the name information and the classified color information, and the collectively labeled classified cell image may be displayed. After the collective labeling is finally completed, a text document corresponding to the specimen image may be automatically generated, and the use information may be saved in the text document. By analyzing the usage information, preset information regarding each class of cells in the specimen image may be obtained. Data traceability can also be achieved, which is conducive to research work.

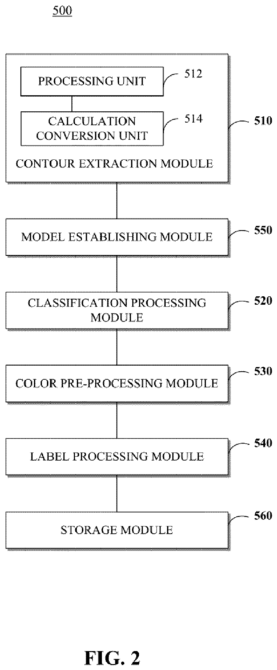

The present disclosure also provides bone marrow cell labeling systems. FIG. 2 is a schematic block diagram of a bone marrow cell labeling system 500 according to an exemplary embodiment of the present disclosure. The bone marrow cell labeling system 500 may include a contour extraction module 510, a classification processing module 520, a color pre-processing module 530, and a label processing module 540.

The contour extraction module 510 may be configured to acquire a specimen image, extract a cell contour from the specimen image by using an image processing algorithm, and mark the extracted cell contour by a marking frame, to obtain a contour cell image.

The classification processing module 520 may be configured to input the contour cell image into a classification model to obtain a classified cell image and its corresponding classified cell information.

The color pre-processing module 530 may be configured to obtain preset color information and preset name information for cell classes, and classify the preset color information according to the cell classes to obtain classification color information.

The label processing module 540 may be configured to extract name information and classified color information corresponding to the classified cell image according to the classified cell information of the classified cell image and the classification color information, collectively label the classified cell image according to the extracted name information and classified color information, and display the collectively labeled cell image.

The classified cell image obtained by the embodiment of the present disclosure is collectively labeled according to the corresponding name information and the classified color information. That is, when labeling the cell name information, and the classified color information of the cell is also labeled. Specific and non-repeating color markings are not only easy to read, but also avoid naming conflicts for easy access.

In one exemplary embodiment, the bone marrow cell labeling system 500 may further include a model establishing module 550.

The model establishing module 550 may be configured to establish a classification model by a classification process or a classifier before inputting the contour cell image into the classification model.

In one exemplary embodiment, the contour extraction module 510 may include a processing unit 512 and a calculation conversion unit 514.

The processing unit 512 may be configured to perform a grayscale processing and a denoising processing on the specimen image to obtain a denoised grayscale image.

The calculation conversion unit 514 may be configured to calculate an optimal threshold value of the denoised grayscale picture by using the maximum variance method, divide the denoised gray image according to the optimal threshold value to obtain a divided image, and convert the divided image into a binarized image, to complete the cell contour extraction.

In one exemplary embodiment, the bone marrow cell labeling system 500 may further include a storage module 560.

The storage module 560 may be configured to store the preset name information and the classification color information after obtaining the classification color information, and establish a labeling database.

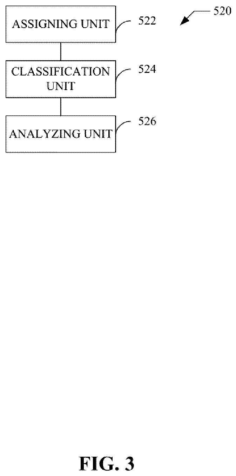

FIG. 3 is a schematic block diagram of the classification processing module 520 (Fig. 2), according to an exemplary embodiment of the present disclosure. The classification processing module 520 includes an assigning unit 522, a classification unit 524, and an analyzing unit 526.

The assigning unit 522 may be configured to input the contour cell image into the classification model, and assign a probability of a preset cell class to the contour cell image.

The classification unit 524 may be configured to classify the contour cell image according to the corresponding probability and a preset threshold value to obtain a classified cell image.

The analyzing unit 526 may be configured to analyze the classified cell image to obtain its corresponding classified cell information.

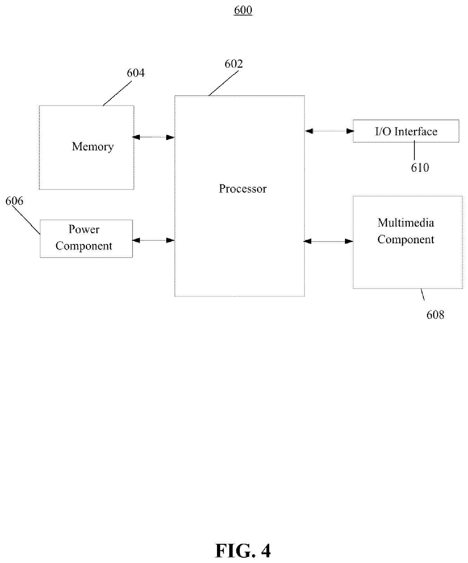

FIG. 4 is a block diagram of a device 600 for labeling bone marrow cells, according to an exemplary embodiment of the present disclosure. For example, the device 600 may be a computer, a cloud server, and the like. Also for example, the device 600 may implement the system 500 (Fig. 2), including any module of the system 500 (e.g., the contour extraction module 510, classification processing module 520, etc.).

Referring to FIG. 4, the device 600 includes one or more of the following components: a processing component 602, a memory 604, a power component 606, a multimedia component 608, an Input/Output (I/O) interface 610.

The processor 602 is configured to control overall operations of the device 600, such as the operations associated with labeling bone marrow cells and displaying the labelling. The processor 602 is configured to execute instructions to perform all or part of the disclosed methods. In some embodiments, the processor 602 includes a multimedia module configured to facilitate the interaction between the multimedia component 608 and the processor 602.

The memory 604 is configured to store various types of data to support the operation of the device 600. Examples of such data include instructions for any applications or methods implemented by the device 600, cell images, the labelling database, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, or a magnetic or optical disk.

The power component 606 is configured to provide power to various components of the device 600. The power component 606 includes a power management system, one or more power sources, and any other components associated with the generation, management, and distribution of power in the device 600.

The multimedia component 608 includes a screen providing an output interface between the device 600 and a user of the device 600. In some embodiments, the screen may include a liquid crystal display and a press panel.

The I/O interface 610 is configured to provide an interface for the processor 602 and peripheral interface modules, such as a keyboard, a click wheel, buttons, and the like.

In some embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the disclosed methods.

The present disclosure also provides a non-transitory computer-readable storage medium including instructions, such as included in the memory 604. The instructions are executable by the processor 602 of the device 600, for performing the disclosed methods of labeling bone marrow cells. For example, the non-transitory computer-readable storage medium may be a ROM, a RAM, a CD-ROM, a magnetic tape, a floppy disc, an optical data storage device, and the like.

One of ordinary skill in the art will understand that the above described modules can each be implemented by hardware, or software, or a combination of hardware and software. One of ordinary skill in the art will also understand that multiple ones of the above described modules may be combined as one module, and each of the above described modules may be further divided into a plurality of sub-modules.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It is to be understood that the present disclosure is not limited to the exact construction that has been described above and illustrated in the accompanying drawings, and that various modifications and changes can be made without departing form the scope thereof. It is intended that the scope of the disclosure only be limited by the appended claims.

## Claims

1. A method for labeling bone marrow cells, comprising:
acquiring a specimen image, extracting a cell contour from the specimen image by using an image processing algorithm, and marking the extracted cell contour by a marking frame, to obtain a contour cell image of the extracted cell contour;
inputting the contour cell image into a classification model to obtain a classified cell image and its corresponding classified cell information;
obtaining preset color information and preset name information for preset cell classes, and classifying the preset color information according to the preset cell classes to obtain classification color information; and
extracting name information and classified color information corresponding to the classified cell image according to the classified cell information and the classification color information, collectively labeling the classified cell image according to the extracted name information and classified color information, and displaying the collectively labeled classified cell image.

2. The method of claim 1, further comprising:
establishing the classification model by a classification process or a classifier before inputting the contour cell image into the classification model.

3. The method of claim 1, wherein the inputting the contour cell image into the classification model to obtain the classified cell image and its corresponding classified cell information, comprises:
inputting the contour cell image into the classification model, and assigning a probability of a preset cell class to the contour cell image;
classifying the contour cell image according to its corresponding probability and a preset threshold value to obtain the classified cell image; and
analyzing the classified cell image to obtain its corresponding classified cell information.

4. The method of claim 1, wherein the extracting the cell contour from the specimen image by using the image processing algorithm, comprises:
performing a grayscale processing and a denoising processing on the specimen image to obtain a denoised grayscale image; and
calculating an optimal threshold value of the denoised grayscale image by using a maximum variance method, dividing the denoised grayscale image according to the optimal threshold value to obtain a divided image, and converting the divided image into a binarized image.

5. The method of claim 1, further comprising:
after obtaining the classification color information, storing the preset name information and the classification color information to create a labeling database.

6. A bone marrow cell labeling system, comprising:
a processor; and
a memory storing instructions executable by the processor,
wherein the processor is configured to:
acquire a specimen image, extract a cell contour from the specimen image by using an image processing algorithm, and mark the extracted cell contour by a marking frame, to obtain a contour cell image;
input the contour cell image into a classification model to obtain a classified cell image and its corresponding classified cell information;
obtain preset color information and preset name information for preset cell classes, and classify the preset color information according to the preset cell classes to obtain classification color information; and
extract name information and classified color information corresponding to the classified cell image according to the classified cell information and the classification color information, collectively label the classified cell image according to the extracted name information and classified color information, and display the collectively labeled classified cell image.

7. The bone marrow cell labeling system according to claim 6, wherein the processor is further configured to:
establish the classification model by a classification process or a classifier before the contour cell image is input into the classification model.

8. The bone marrow cell labeling system according to claim 6, wherein the processor is further configured to:
input the contour cell image into the classification model, and assign a probability of a preset cell class to the contour cell image;
classify the contour cell image according to the corresponding probability and a preset threshold value to obtain a classified cell image; and
analyze the classified cell image to obtain its corresponding classified cell information.

9. The bone marrow cell labeling system according to claim 6, wherein the processor is further configured to:
perform a grayscale processing and a denoising processing on the specimen image to obtain a denoised grayscale image; and
calculate an optimal threshold value of the denoised grayscale image by using a maximum variance method, divide the denoised grayscale image by the optimal threshold value to obtain a divided image, and convert the divided image into a binarized image.

10. The bone marrow cell labeling system according to claim 6, wherein the processor is further configured to:
after obtaining the classification color information, store the preset name information and the classification color information to create a labeling database.
